# EUROPÄISCHE PATENTSCHRIFT

(11) **EP 1 509 565 B1**
(45) Veröffentlichungstag und Bekanntmachung des Hinweises auf die Patenterteilung: **01.03.2006**
(21) Anmeldenummer: 03725196.4
(22) Anmeldetag: 20.05.2003
(51) Int. Cl.: C08J 7/04, C09D 7/12

(54) **SELBSTREINIGENDER KUNSTSTOFFKÖRPER UND VERFAHREN ZU DESSEN HERSTELLUNG**
SELF-CLEANING SYNTHETIC BODY AND METHOD FOR PRODUCING THE SAME
CORPS PLASTIQUE AUTONETTOYANT ET SON PROCEDE DE PRODUCTION

(30) Priorität: 04.06.2002 DE 10224895
(43) Veröffentlichungstag der Anmeldung: 02.03.2005
(73) Patentinhaber: Röhm GmbH & Co. KG, 64293 Darmstadt (DE)
(72) Erfinder: HASSKERL, Thomas, 61476 Kronberg (DE); NEEB, Rolf, 64319 Pfungstadt (DE); SEYOUM, Ghirmay, 63329 Egelsbach (DE)
(86) Internationale Anmeldenummer: PCT/EP2003/005278
(87) Internationale Veröffentlichungsnummer: WO 2003/102056

(56) Entgegenhaltungen:
- EP-A- 0 816 466
- EP-A- 1 022 318
- US-A1- 2002 023 800

## Beschreibung

Die vorliegende Erfindung betrifft selbstreinigende Kunststoffkörper, die Siloxanbeschichtungen mit TiO₂-Partikeln aufweisen.

Selbstreinigende Körper werden durch Bestrahlung mit UV-Licht in der Gegenwart von Wasser super-drophil und sind in der Lage organischen Schmutz bis zu Kohlendioxid und Wasser abzubauen. Diese Fähigkeit der Oberfläche wird im allgemeinen durch den photokatalytischen Effekt von Titandioxid erzielt, das auf festen Trägern fixiert und zum Beispiel durch Einbrennen bei hohen Temperaturen fest an das Substrat gebunden werden kann. Ein Beispiel sind Silikatgläser für selbstreinigende Fenster wie sie in EP 850 203 B1 von Rhodia Chemie beschrieben werden.

Kunststoffsubstrate wie z.B. Acrylglas oder Polycarbonat, die in großem Umfang als Verglasungsmaterial oder für transparente Lärmschutzwände eingesetzt werden, sollen aus ästhetischen Gründen möglichst transparent und sauber sein, um Fahrgästen in einem Zug oder Autofahrern eine klare Sicht auf die umliegende Landschaft zu ermöglichen. Sie werden vor allem auf Brücken aber auch zur Auflockerung von monotonen Beton-Lärmschutzwänden verwendet und sollen gegen die Ermüdung der Autofahrer beitragen.

Durch Autoabgase, Reifenabrieb, Staub und organischen Schmutz werden transparente Lärmschutzwände schnell unansehnlich und unästhetisch. Es wurden deshalb zahlreiche Versuche unternommen, transparente Kunststoffe mit selbstreinigenden Beschichtungen auszurüsten. Dabei galt es, die photokatalytische Aktivität des Titandiöxids für die Zersetzung des an der Substratoberfläche anhaftenden Schmutzes zugänglich zu machen, andererseits aber das organische Substrat selbst vor der Zerstörung durch das Titandioxid zu schützen.

Mit selbstreinigenden Siloxanbeschichtungen versehene Kunststoffkörper sind ebenfalls bekannt. Üblicherweise weisen derartige Substrate eine Doppelschicht aus Siloxan mit unterschiedlicher Zusammensetzung auf, wobei lediglich die äußere Schicht einen photokatalytisch aktiven Zusatzstoff, beispielsweise TiO₂ in Anatas- oder Brookit-Modifikation enthält.

Beispielsweise beschreibt die Druckschrift EP-A-1 022 318 beschichtete Platten aus Kunststoff, die eine photokatalytisch wirksame Schicht aufweisen. In den Beispielen finden sich jedoch lediglich Platten oder Filme, die eine insgesamt 1,2 µm dünne Beschichtung aufweisen. Derartig dünne Beschichtungen zeigen jedoch nur eine sehr geringe Kratzfestigkeit.

Zwar wird in der Beschreibung dargelegt, daß auch dickere Schichten erhalten werden können. Allerdings findet sich lediglich der Hinweis, daß dickere Schichten durch wiederholtes Auftragen von Siloxanbeschichtungsmitteln erhalten werden können. Ohne die Verwendung von Zusatzstoffen haftet die TiO₂ enthaltende Siloxanschicht jedoch nicht auf der zunächst aufgetragenen Siloxanschicht, die als Grundierung zum Schutz des darunter liegenden Kunststoffkörpers dient.

Um das Problem der unzureichenden Substrathaftung zu lösen, können anorganisch-organische Schichten aus Siloxannetzwerken als Isolierschicht für das Kunststoffsubstrat eingesetzt werden. Die Schichten haften bei geeigneter Zusammensetzung deutlich besser als rein anorganische Materialien und sind aufgrund ihres Hybridcharakters beständiger gegen die photokatalytische Aktivität des Titandioxids als rein organische Schichten.

Versuche haben jedoch gezeigt, daß durch Bewitterung, insbesondere durch UV-Bestrahlung, die Kratzfestigkeit von Kunststoffkörpern, die mit anorganisch-organische Schichten versehen sind, mit der Zeit abnimmt, wobei die Transparenz der Kunststoffkörper nachläßt. Darüber hinaus ist auch die Kratzfestigkeit unmittelbar nach der Herstellung nicht zufriedenstellend.

Problematisch an diesen Kunststoffkörpern des Standes der Technik ist daher ihre geringe Kratzfestigkeit oder ihre geringe Witterungsbeständigkeit. Durch Umwelteinflüsse wird daher die Beschichtung mit der Zeit abgetragen, so daß sie ihre Fähigkeit zur Selbstreinigung verlieren.

In Anbetracht des hierin angegebenen und diskutierten Standes der Technik war es mithin Aufgabe der vorliegenden Erfindung selbstreinigende Kunststoffkörper anzugeben, die eine besonders hohe Kratzfestigkeit aufweisen.

Eine weitere Aufgabe der Erfindung bestand darin, daß die Kunststoffkörper eine hohe Haltbarkeit, insbesondere eine hohe Beständigkeit gegen UV-Bestrahlung oder Bewitterung aufweisen.

Des weiteren lag der Erfindung die Aufgabe zugrunde, kratzfeste, selbstreinigende Kunststoffkörper zur Verfügung zu stellen, die besonders einfach hergestellt werden können. So sollten zur Herstellung der Kunststoffkörper insbesondere Substrate verwendet werden können, die durch Extrusion, Spritzguß sowie durch Gußverfahren erhältlich sind.

Darüber hinaus war es mithin Aufgabe der vorliegenden Erfindung, Kunststoffkörper zu schaffen, die kostengünstig hergestellt werden können.

Eine weitere Aufgabe der vorliegenden Erfindung bestand darin, kratzfeste, selbstreinigende Kunststoffkörper anzugeben, die hervorragende mechanische Eigenschaften zeigen. Diese Eigenschaft ist insbesondere für Anwendungen wichtig, bei denen der Kunststoffkörper eine hohe Stabilität gegen Schlageinwirkung aufweisen soll.

Darüber hinaus sollten die Kunststoffkörper besonders gute optische Eigenschaften aufweisen.

Ein weiteres Ziel der vorliegenden Erfindung bestand darin, Kunststoffkörper bereitzustellen, die auf einfache Weise in Größe und Form den Anforderungen angepaßt werden können.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebenen Kunststoffkörper. Zweckmäßige Abwandlungen der erfindungsgemäßen Kunststoffkörper werden in den auf Anspruch 1 rückbezogenen Unteransprüchen unter Schutz gestellt.

Hinsichtlich Verfahren zur Herstellung liefert der Anspruch 22 eine Lösung der zugrunde liegenden Aufgabe.

Dadurch, daß man auf ein Kunststoffsubstrat
a) eine Siloxan-Beschichtung (a) aufbringt und aushärtet,
b) den polaren Anteil der Oberflächenenergie der ausgehärteten Siloxanbeschichtung auf einen Wert von mindestens 10 mN/m erhöht und
c) eine photokatalytisch aktive TiO₂-Partikel enthaltende Beschichtung (b) aufbringt und aushärtet, gelingt es selbstreinigende Kunststoffkörper zur Verfügung zu stellen, die eine besonders hohe Kratzfestigkeit aufweisen.

Durch die erfindungsgemäßen Maßnahmen werden u.a. insbesondere folgende Vorteile erzielt:
□ Die Kunststoffkörper der vorliegenden Erfindung sind gegenüber der Bildung von Kratzern auf der Oberfläche sehr unempfindlich.
□ Die erfindungsgemäßen Kunststoffkörper zeigen eine hohe Beständigkeit gegen UV-Bestrahlung.
□ Des weiteren zeigen Kunststoffkörper schon bei geringer UV-Bestrahlung eine besonders hohe Selbstreinigung.
□ Darüber hinaus können die Kunststoffkörper der vorliegenden Erfindung besonders kostengünstig hergestellt werden, ohne daß teuere Additive verwendet werden müssen.
□ Des weiteren ermöglicht die vorliegende Erfindung die Erzeugung von selbstreinigenden Beschichtungen auf schon mit Siloxanen beschichteten Kunststoffsubstraten. Dies hat insbesondere den Vorteil, daß aus der Produktion von Kunststoffkörpern, die mit kratzfesten Beschichtungen versehen sind, Platten herausgenommen werden können und später mit einer weiteren Beschichtung versehen werden können, die selbstreinigende Eigenschaften aufweist.
□ Die kratzfesten Kunststoffkörper der vorliegenden Erfindung können auf bestimmte Erfordernisse angepaßt werden. Insbesondere kann die Größe und die Form des Kunststoffkörpers in weiten Bereichen variiert werden, ohne daß hierdurch die Kratzfestigkeit oder die selbstreinigende Eigenschaft beeinträchtigt wird. Des weiteren stellt die vorliegende Erfindung auch Kunststoffkörper mit hervorragenden optischen Eigenschaften zur Verfügung.
□ Die kratzfesten Kunststoffkörper der vorliegenden Erfindung weisen gute mechanische Eigenschaften auf.

Die erfindungsgemäßen Kunststoffkörper sind durch Beschichtung von Kunststoffsubstraten erhältlich. Für die Zwecke der vorliegenden Erfindung geeignete Kunststoffsubstrat sind an sich bekannt. Derartige Substrate umfassen insbesondere Polycarbonate, Polystyrole, Polyester, beispielsweise Polyethylenterephthalat (PET) und Polybutylenterephthalat (PBT), cycloolefinische Polymere(COC) und/oder Poly(meth)acrylate. Bevorzugt sind hierbei Polycarbonate, cycloolefinische Polymere und Poly(meth)acrylate, wobei Poly(meth)acrylate besonders bevorzugt sind.

Polycarbonate sind in der Fachwelt bekannt. Polycarbonate können formal als Polyester aus Kohlensäure und aliphatischen oder aromatischen Dihydroxy-Verbindungen betrachtet werden. Sie sind leicht zugänglich durch Umsetzung von Diglykolen oder Bisphenolen mit Phosgen bzw. Kohlensäurediestern in Polykondensations- bzw. Umesterungsreaktionen.

Hierbei sind Polycarbonate bevorzugt, die sich von Bisphenolen ableiten. Zu diesen Bisphenolen gehören insbesondere 2,2-Bis-(4-hydroxyphenyl)-propan (Bisphenol A), 2,2-Bis-(4-hydroxyphenyl)-butan (Bisphenol B), 1,1-Bis(4-hydroxyphenyl)cyclohexan (Bisphenol C), 2,2'-Methylendiphenol (Bisphenol F), 2,2-Bis(3,5-dibrom-4-hydroxyphenyl)propan (Tetrabrombisphenol A) und 2,2-Bis(3,5-dimethyl-4-hydroxyphenyl)propan (Tetramethylbisphenol A).

Üblich werden derartige aromatische Polycarbonate durch Grenzflächenpolykondensation oder Umesterung hergestellt, wobei Einzelheiten in Encycl. Polym. Sci. Engng. 11, 648-718 dargestellt sind.

Bei der Grenzflächenpolykondensation werden die Bisphenole als wäßrige, alkalische Lösung in inerten organischen Lösungsmitteln, wie beispielsweise Methylenchlorid, Chlorbenzol oder Tetrahydrofuran, emulgiert und in einer Stufenreaktion mit Phosgen umgesetzt. Als Katalysatoren gelangen Amine, bei sterisch gehinderten Bisphenolen auch Phasentransferkatalysatoren zum Einsatz. Die resultierenden Polymere sind in den verwendeten organischen Lösungsmitteln löslich.

Ober die Wahl der Bisphenole können die Eigenschaften der Polymere breit variiert werden. Bei gleichzeitigem Einsatz unterschiedlicher Bisphenole lassen sich in Mehrstufen-Polykondensationen auch Block-Polymere aufbauen.

Cycloolefinische Polymere sind Polymere, die unter Verwendung von cyclischen Olefinen, insbesondere von polycyclischen Olefinen erhältlich sind.

Cyclische Olefine umfassen beispielsweise monocyclische Olefine, wie Cyclopenten, Cyclopentadien, Cyclohexen, Cyclohepten, Cycloocten sowie Alkylderivate dieser monocyclischen Olefine mit 1 bis 3 Kohlenstoffatomen, wie Methyl, Ethyl oder Propyl, wie beispielsweise Methylcyclohexen oder Dimethylcyclohexen, sowie Acrylat- und/oder Methacrylatderivate dieser monocyclischen Verbindungen. Darüber hinaus können auch Cycloalkane mit olefinischen Seitenketten als cyclische olefine verwendet werden, wie beispielsweise Cyclopentylmethacrylat.

Bevorzugt sind verbrückte, polycyclische Olefinverbindungen. Diese polycyclischen Olefinverbindungen können die Doppelbindung sowohl im Ring aufweisen, es handelt sich hierbei um verbrückte polycyclische Cycloalkene, als auch in Seitenketten. Hierbei handelt es sich um Vinylderivate, Allyloxycarboxyderivate und (Meth)acryloxyderivate von polycyclischen Cycloalkanverbindungen. Diese Verbindungen können des weiteren Alkyl-, Aryl- oder Aralkylsubstituenten aufweisen.

Beispielhafte polycyclische Verbindungen sind, ohne daß hierdurch eine Einschränkung erfolgen soll, Bicyclo[2.2.1]hept-2-en (Norbornen), Bicyclo[2.2.1]hept-2,5-dien (2,5-Norbornadien), Ethyl-bicyclo[2.2.1]hept-2-en (Ethylnorbornen), Ethylidenbicyclo[2.2.1]hept-2-en (Ethyliden-2-norbornen), Phenylbicyclo[2.2.1]hept-2-en, Bicyclo[4.3.0]nona-3,8-dien, Tricyclo[4.3.0.1^{2,5}]-3-decen, Tricyclo[4.3.0.1^{2,5}]-3,8-decen-(3,8-dihydrodicyclopentadien), Tricyclo[4.4.0.1^{2,5}]-3-undecen, Tetracyclo[4.4.0.1^{2,5},1^{7,10}]-3-dodecen, Ethyliden-tetracyclo[4.4.0.1^{2,5},1^{7,10}]-3-dodecen, Methyloxycarbonyltetracyclo[4.4.0.1^{2,6},1^{7,10}]-3-dodecen, Ethyliden-9-ethyltetracyclo[4.4.0.1^{2,5},1^{7,10}]-3-dodecen, Pentacyclo[4.7.0.1^{2,5},O,O^{3,13},1^{9,12}]-3-pentadecen, Pentacyclo[6.1.1^{3,6},0^{2,7},0^{9,13}]-4-pentadecen, Hexacyclo[6.6.1.1^{3,6},1^{10,13},0^{2,7},0^{9,14}]-4-heptadecen, Dimethylhexacyclo[6.6.1.1^{3,6},1^{10,13},0^{2,7},0^{9,14}]-4-heptadecen, Bis(allyloxycarboxy)tricyclo[4.3.0.1^{2,5}]-decan, Bis(methacryloxy)tricyclo[4.3.0.1^{2,5}]-decan, Bis(acryloxy)tricyclo[4.3.0.1^{2,5}]-decan.

Die cycloolefinischen Polymere werden unter Verwendung von zumindest einer der zuvor beschriebenen cycloolefinischen Verbindungen, insbesondere der polycyclischen Kohlenwasserstoffverbindungen hergestellt. Darüber hinaus können bei der Herstellung der cycloolefinischen Polymere weitere Olefine verwendet werden, die mit den zuvor genannten cycloolefinischen Monomeren copolymerisiert werden können. Hierzu gehören u.a. Ethylen, Propylen, Isopren, Butadien, Methylpenten, Styrol und Vinyltoluol.

Die meisten der zuvor genannten Olefine, insbesondere auch die Cycloolefine und Polycycloolefine, können kommerziell erhalten werden. Darüber hinaus sind viele cyclische und polycyclische Olefine durch Diels-Alder-Additionsreaktionen erhältlich.
Die Herstellung der cycloolefinischen Polymere kann auf bekannte Art und Weise erfolgen, wie dies u.a. in den japanischen Patentschriften 11818/1972, 43412/1983, 1442/1986 und 19761/1987 und den japanischen Offenlegungsschriften Nr. 75700/1975, 129434/1980, 127728/1983, 168708/1985, 271308/1986, 221118/1988 und 180976/1990 und in den Europäischen Patentanmeldungen EP-A-0 6 610 851, EP-A-0 6 485 893, EP-A-0 6 407 870 und EP-A-0 6 688 801 dargestellt ist.

Die cycloolefinischen Polymere können beispielsweise unter Verwendung von Aluminiumverbindungen, Vanadiumverbindungen, Wolframverbindungen oder Borverbindungen als Katalysator in einem Lösungsmittel polymerisiert werden.

Es wird angenommen, daß die Polymerisation je nach den Bedingungen, insbesondere dem eingesetzten Katalysator, unter Ringöffnung oder unter Öffnung der Doppelbindung erfolgen kann.
Darüber hinaus ist es möglich, cycloolefinische Polymere durch radikalische Polymerisation zu erhalten, wobei Licht oder ein Initiator als Radikalbildner verwendet wird. Dies gilt insbesondere für die Acryloylderivate der Cycloolefine und/oder Cycloalkane. Diese Art der Polymerisation kann sowohl in Lösung als auch in Substanz erfolgen.

Ein weiteres bevorzugtes Kunststoffsubstrat umfaßt Poly(meth)acrylate. Diese Polymere werden im allgemeinen durch radikalische Polymerisation von Mischungen erhalten, die (Meth)acrylate enthalten. Der Ausdruck (Meth)acrylate umfaßt Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert-Butyl(meth)acrylat, Pentyl(meth)acrylat und 2-Ethylhexyl(meth)acrylat;
(Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat;
Aryl(meth)acrylate, wie Benzyl(meth)acrylat oder
Phenyl(meth)acrylat, wobei die Arylreste jeweils unsubstituiert oder bis zu vierfach substituiert sein können;
Cycloalkyl(meth)acrylate, wie 3-Vinylcyclohexyl(meth)acrylat, Bornyl(meth)acrylat;
Hydroxylalkyl(meth)acrylate, wie
3-Hydroxypropyl(meth)acrylat,
3,4-Dihydroxybutyl(meth)acrylat,
2-Hydroxyethyl(meth)acrylat, 2-Hydroxypropyl(meth)acrylat;
Glycoldi(meth)acrylate, wie 1,4-Butandioldi(meth)acrylat,
(Meth)acrylate von Etheralkoholen, wie
Tetrahydrofurfuryl(meth)acrylat, Vinyloxyethoxyethyl(meth)acrylat
Amide und Nitrile der (Meth)acrylsäure, wie
N-(3-Dimethylaminopropyl)(meth)acrylamid,
N-(Diethylphosphono)(meth)acrytamid,
1-Methacryloylamido-2-methyl-2-propanol;
schwefelhaltige Methacrylate, wie
Ethylsulfinylethyl(meth)acrylat,
4-Thiocyanatobutyl(meth)acrylat,
Ethylsulfonylethyl(meth)acrylat,
Thiocyanatomethyl(meth)acrylat,
Methylsulfinylmethyl(meth)acrylat,
Bis((meth)acryloyloxyethyl)sulfid;
mehrwertige (Meth)acrylate, wie
Trimethyloylpropantri(meth)acrylat,
Pentaerythrittetra(meth)acrylat und
Pentaerythrittri(meth)acrylat.

Gemäß einem bevorzugten Aspekt der vorliegenden Erfindung enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;
Acrylnitril; Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol,
N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid, Methylmaleinsäureanhydrid, Maleinimid, Methylmaleinimid; und Diene, wie beispielsweise Divinylbenzol.

Im allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AlBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 bis 10 Gew.-%, vorzugsweise von 0,5 bis 3 Gew.-%, bezogen auf das Gewicht der Monomeren, eingesetzt.

Die zuvor genannten Polymere können einzeln oder als Mischung verwendet werden. Hierbei können auch verschiedene Polycarbonate, Poly(meth)acrylate oder cycloolefinische Polymere eingesetzt werden, die sich beispielsweise im Molekulargewicht oder in der Monomerzusammensetzung unterscheiden.

Die erfindungsgemäßen Kunststoffsubstrate können beispielsweise aus Formmassen der zuvor genannten Polymere hergestellt werden. Hierbei werden im allgemeinen thermoplastische Formgebungsverfahren eingesetzt, wie Extrusion oder Spritzguß.

Das Gewichtsmittel des Molekulargewichts M_{w} der erfindungsgemäß als Formmasse zur Herstellung der Kunststoffsubstrate zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne daß hierdurch eine Einschränkung erfolgen soll.

Des weiteren können die Kunststoffsubstrate durch Gußkammerverfahren erzeugt werden. Hierbei werden beispielsweise geeignete (Meth)acrylmischungen in einer Form gegeben und polymerisiert. Derartige (Meth)acrylmischungen weisen im allgemeinen die zuvor dargelegten (Meth)acrylate, insbesondere Methylmethacrylat auf. Des weiteren können die (Meth)acrylmischungen die zuvor dargelegten Copolymere sowie, insbesondere zur Einstellung der viskosität, Polymere, insbesondere Poly(meth)acrylate, enthalten.

Darüber hinaus können die zur Herstellungen der Kunststoffsubstrate zu verwendenden Formmassen sowie die Acrylharze übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite, Phosphorinane, Phospholane oder Phosphonate, Pigmente, Verwitterungsschutzmittel und Weichmacher. Die Menge an Zusatzstoffen ist jedoch auf den Anwendungszweck beschränkt.

Besonders bevorzugte Formmassen, die Poly(meth)acrylate umfassen, sind unter dem Handelsnamen PLEXIGLAS® von der Fa. Degussa AG kommerziell erhältlich. Bevorzugte Formmassen, die cycloolefinische Polymere umfassen, können unter dem Handelsnamen ®Topas von Ticona und ®Zeonex von Nippon Zeon bezogen werden. PolycarbonatFormmassen sind beispielsweise unter dem Handelsnamen ®Makrolon von Bayer oder ®lexan von General Electric erhältlich.

Besonders bevorzugt umfaßt das Kunststoffsubstrat mindestens 80 Gew.-%, insbesondere mindestens 90 Gew.-%, bezogen auf das Gesamtgewicht des Substrats, Poly(meth)acrylate, Polycarbonate und/oder cycloolefinische Polymere. Besonders bevorzugt bestehen die Kunststoffsubstrate aus Polymethylmethacrylat, wobei das Polymethylmethacrylat übliche Additive enthalten kann.

Gemäß einer bevorzugten Ausführungsform können Kunststoffsubstrate eine Schlagzähigkeit gemäß ISO 179/1 von mindestens 10 kJ/m², bevorzugt mindestens 15 kJ/m² aufweisen.

Die Form sowie die Größe des Kunststoffsubstrats sind nicht wesentlich für die vorliegende Erfindung. Im allgemeinen werden häufig platten- oder tafelförmige Substrate eingesetzt, die eine Dicke im Bereich von 1 mm bis 200 mm, insbesondere 5 bis 30 mm aufweisen.

Die Kunststoffkörper der vorliegenden Erfindung werden zunächst mit einer Siloxanbeschichtung versehen, die das Kunststoffsubstrat gegen den photokatalytischen Abbau durch die photokatalytisch wirkende Deckschicht schützt.

Kratzfeste Siloxanlacke, die zur Herstellung der Beschichtung (a) dienen können, sind an sich bekannt und werden zur Ausrüstung von polymeren Verglasungsmaterialien eingesetzt. Sie zeichnen sich aufgrund ihres anorganischen Charakters durch gute Beständigkeit gegenüber UV-Strahlung und Witterungseinflüssen aus. Die Herstellung derartiger Lacke wird beispielsweise in EP-A-0 073911 beschrieben. Üblich sind unter anderem Lacke, die neben den Siloxan-Kondensationsprodukten Wasser und/oder Alkohol als Lösungsmittel enthalten.

Diese Siloxanlacke können unter anderem durch Kondensation oder Hydrolyse von organischen Siliciumverbindungen der allgemeinen Formel (I)

R¹ₙSiX₄₋ₙ (I),

worin R¹ eine 1 bis 20 Kohlenstoffatome aufweisende Gruppe, X ein Alkoxyrest mit 1 bis 20 Kohlenstoffatomen oder ein Halogen und n eine ganze Zahl von 0 bis 3 darstellt, wobei verschiedene Reste X oder R¹ jeweils gleich oder unterschiedlich sein können, erhalten werden.

Der Ausdruck "eine 1 bis 20 Kohlenstoff aufweisende Gruppe" kennzeichnet Reste organischer Verbindungen mit 1 bis 20 Kohlenstoffatomen. Er umfaßt Alkyl-, Cycloalkyl-, aromatische Gruppen, Alkenylgruppen und Alkinylgruppen mit 1 bis 20 Kohlenstoffatomen, sowie heteroalipatische und heteroaromatische Gruppen, die neben Kohlenstoff- und Wasserstoffatomen insbesondere Sauerstoff-, Stickstoff-, Schwefel- und Phosphoratome aufweisen. Dabei können die genannten Gruppen verzweigt oder nicht verzweigt sein, wobei der Rest R¹ substituiert oder unsubstituiert sein kann. Zu den Substituenten gehören insbesondere Halogene, 1 bis 20 Kohlenstoff aufweisende Gruppen, Nitro-, Sulfonsäure-, Alkoxy-, Cycloalkoxy-, Alkanoyl-, Alkoxycarbonyl-, Sulfonsäureester-, Sulfinsäure-, Sulfinsäureester-, Thiol-, Cyanid-, Epoxy-, (Meth)acryloyl-. Amino- und Hydroxygruppen. Im Rahmen der vorliegenden Erfindung bezeichnet der Ausdruck "Halogen" ein Fluor-, Chlor-, Brom- oder lodatom.

Zu den bevorzugten Alkylgruppen gehören die Methyl-, Ethyl-, Propyl-, Isopropyl-, 1-Butyl-, 2-Butyl-, 2-Methylpropyl-, tert.-Butyl-, Pentyl-, 2-Methylbutyl-, 1,1-Dimethylpropyl-, Hexyl-, Heptyl-, Octyl-, 1,1,3,3-Tetramethylbutyl-, Nonyl-, 1-Decyl-, 2-Decyl-, Undecyl-, Dodecyl-. Pentadecyl- und die Eicosyl-Gruppe.

Zu den bevorzugten Cycloalkylgruppen gehören die Cyclopropyl-, Cyclobutyl-, Cyclopentyl-, Cyclohexyl-, Cycloheptyl- und die Cyclooctyl-Gruppe, die gegebenenfalls mit verzweigten oder nicht verzweigten Alkylgruppen substituiert sind.

Zu den bevorzugten Alkenylgruppen gehören die Vinyl-, Allyl-, 2-Methyl-2-propen-, 2-Butenyl-, 2-Pentenyl-, 2-Decenyl- und die 2-Eicosenyl-Gruppe.

Zu den bevorzugten Alkinylgruppen gehören die Ethinyl-, Propargyl-, 2-Methyl-2- propin, 2-Butinyl-, 2-Pentinyl- und die 2-Decinyl-Gruppe.

Zu den bevorzugten Alkanoylgruppen gehören die Formyl-, Acetyl-, Propionyl-, 2-Methylpropionyl-, Butyryl-, Valeroyl-, Pivaloyl-, Hexanoyl-, Decanoyl- und die Dodecanoyl-Gruppe.

Zu den bevorzugten Alkoxycarbonylgruppen gehören die Methoxycarbonyl-, Ethoxycarbonyl-, Propoxycarbonyl-, Butoxycarbonyl-, tert.-Butoxycarbonyl-, Hexyloxycarbonyl-, 2-Methylhexyloxycarbonyl-, Decyloxycarbonyl- oder Dodecyloxycarbonyl-Gruppe.

Zu den bevorzugten Alkoxygruppen gehören die Methoxy-, Ethoxy-, Propoxy-, Butoxy-, tert.-Butoxy-, Hexyloxy-, 2-Methylhexyloxy-, Decyloxy- oder Dodecyloxy-Gruppe.

Zu den bevorzugten Cycloalkoxygruppen gehören Cycloalkoxygruppen, deren Kohlenwasserstoffrest eine der vorstehend genannten bevorzugten Cycloalkylgruppen ist.

Zu den bevorzugten heteroaliphatischen Gruppen gehören die vorstehend genannten bevorzugten Cycloalkylreste, in denen mindestens eine Kohlenstoff-Einheit durch O, S oder eine Gruppe NR⁸ ersetzt ist und R⁸ Wasserstoff, eine 1 bis 6 Kohlenstoffatome aufweisende Alkyl-, eine 1 bis 6 Kohlenstoffatome aufweisende Alkoxy- oder eine Arylgruppe bedeutet.

Erfindungsgemäß bezeichnen aromatische Gruppen Reste ein oder mehrkerniger aromatischer Verbindungen mit vorzugsweise 6 bis 14, insbesondere 6 bis 12 C-Atomen. Heteroaromatische Gruppen kennzeichnen Arylreste, worin mindestens eine CH-Gruppe durch N ersetzt ist und/oder mindestens zwei benachbarte CH-Gruppen durch S, NH oder O ersetzt sind. Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1.3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Pyrazin, Pyrimidin, Pyridazin, 1,3,5-Triazin, 1,2,4-Triazin, 1,2,4,5-Triazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder 4H-Chinolizin, Diphenylether, Anthracen und Phenanthren ab.

Bevorzugte Reste R¹ lassen sich durch die Formeln (II),

-(CH₂)ₘNH-[(CH₂)ₙ-NH]ₚH (II),

worin m und n für eine Zahl von 1 bis 6, und p für null oder eins steht, oder die Formel (III) 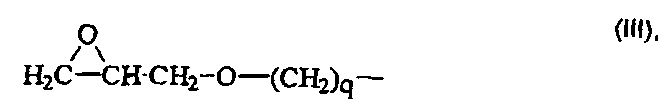
worin q für eine Zahl von 1 bis 6 steht, oder die Formel (IV) 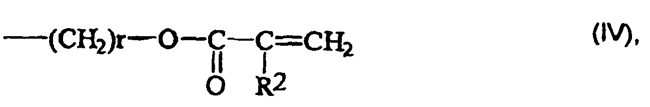
worin R² Methyl oder Wasserstoff und r eine Zahl von 1 bis 6 bedeutet, darstellen.

Ganz besonders bevorzugt stellt der Rest R¹ eine Methyl- oder Ethylgruppe dar.

Hinsichtlich der Definition der Gruppe X in Formel (I) bezüglich der Alkoxygruppe mit 1 bis 20 Kohlenstoffatome sowie des Halogens sei auf die zuvor genannte Definition verwiesen, wobei der Alkylrest der Alkoxygruppe bevorzugt ebenfalls durch die zuvor dargelegten Formeln (II), (III) oder (IV) darstellbar ist. Bevorzugt stellt die Gruppe X ein Methoxy- oder Ethoxyrest oder ein Brom- oder Chloratom dar.

Diese Verbindungen können einzeln oder als Mischung verwendet werden, um Siloxanlacke herzustellen.

Je nach Anzahl der Halogene oder über Sauerstoff an das Silicium gebundene Alkoxygruppen bilden sich Ketten oder verzweigte Siloxane durch Hydrolyse bzw. Kondensation aus den Silanverbindungen der Formel (I). Bevorzugt weisen mindestens 60 Gew.-%, insbesondere mindestens 80 Gew.-% der eingesetzten Silanverbindungen mindestens drei Alkoxygruppen oder Halogenatome auf, bezogen auf das Gewicht der kondensierbaren Silane.

Tetraalkoxysilane umfassen Tetramethoxysilan, Tetraethoxysilan, Tetra-n-propoxysilan, Tetra-i-propoxysilan und Tetra-n-butoxysilane;

Trialkoxysilane umfassen Methyl-trimethoxysilan, Methyl-triethoxysilan, Ethyl-trimethoxysilan, n-Propyl-trimethoxysilan, n-Propyl-triethoxysilan, i-Propyl-triethoxysilan, i-Propyl-trimethoxysilan, i-Propyl-tripropoxysilan, n-Butyl-trimethoxysilan, n-Butyl-triethoxysilan, n-Pentyl-trimethoxysilan, n-Hexyl-trimethoxysilan, n-Heptyl-trimethoxysilan, n-Octyl-trimethoxysilan, Vinyl-trimethoxysilan, Vinyl-triethoxysilan, Cyclohexyl-trimethoxysilan, Cyclohexyl-triethoxysilan, Phenyl-trimethoxysilan, 3-Chlorpropyltrimethoxysilan, 3-Chlorpropyl-triethoxysilan, 3,3,3-Trifluorpropyltrimethoxysilan, 3,3,3-Trifluorpropyl-triethoxysilan, 3-Aminopropyltrimethoxysilan, 3-Aminopropyl-triethoxysilan, 2-Hydroxyethyltrimethoxysilan, 2-Hydroxyethyl-triethoxysilan, 2-Hydroxypropyl-trimethoxysilan, 2-Hydroxypropyl-triethoxysilan, 3-Hydroxypropyl-trimethoxysilan, 3-Hydroxypropyl-triethoxysilan, 3-Mercaptopropyl-trimethoxysilan, 3-Mercaptopropyl-triethoxysilan, 3-Isocyanatopropyl-trimethoxysilan, 3-Isocianatopropyl-triethoxysilan, 3-Glycidoxypropyl-trimethoxysilan, 3-Glycidoxypropyl-triethoxysilan, 2-(3,4-Epoxycyclohexyl)ethyl-trimethoxysilan, 2-(3,4-Epoxycyclohexyl)ethyl-triethoxysilan, 3-(Meth)acryloxypropyl-trimethoxysilan, 3-(Meth)acryloxypropyl-triethoxysilan, 3-Ureidopropyltrimethoxysilan und 3-Ureidopropyl-triethoxysilan;

Dialkoxysilane umfassen Dimethyldimethoxysilan, Dimethyl-diethoxysilan, Diethyl-dimethoxysilan, Diethyl-diethoxysilan, Di-n-propyl-dimethoxysilan, Di-n-propyldiethoxysilan, Di-i-propyl-dimethoxysilan, Di-i-propyl-diethoxysilan, Di-n-butyl-dimethoxysilan, Di-n-butyldiethoxysilan, Di-n-pentyl-dimethoxysilan, Di-n-pentyl-diethoxysilan, Di-n-hexyl-dimethoxysilan, Di-n-hexyl-diethoxysilan, Di-n-peptyl-dimethoxysilan, Di-n-peptyl-diethoxysilan, Di-n-octyldimethoxysilan, Di-n-octyl-diethoxysilan, Di-n-cyclohexyl-dimethoxysilan, Di-n-cyclohexyl-diethoxysilan, Diphenyl-dimethoxysilan und Diphenyldiethoxysilan.

Besonders bevorzugt sind Methyltrimethoxysilan, Methyltriethoxysilan, Ethyltrimethoxysilan und Ethyltriethoxysilan. Gemäß einem besonderen Aspekt der vorliegenden Erfindung beträgt der Anteil dieser besonders bevorzugten Alkyltrialkoxysilanen mindestens 80 Gew.-%, insbesondere mindestens 90 Gew.-%, bezogen auf das Gewicht der eingesetzten Silanverbindungen.

Gemäß einem weiteren Aspekt der vorliegenden Erfindung könne auch Siloxanlacke eingesetzt werden, die kolloidal gelöste SiO₂-Partikel enthalten. Derartige Lösungen können nach dem Sol-Gel-Verfahren erhalten werden, wobei insbesondere Tetraalkoxysilane und/oder Tetrahalogensilane kondensiert werden.

Üblich werden aus den zuvor genannten Silanverbindungen wasserhaltige Beschichtungsmittel dargestellt, indem man siliciumorganischen Verbindungen, mit einer zur Hydrolyse ausreichenden Menge Wasser, d.h. >, 0.5 Mol Wasser pro Mol der zur Hydrolyse vorgesehenen Gruppen, wie z.B. Alkoxygruppen hydrolysiert, vorzugsweise unter Säurekatalyse. Als Säuren können z.B. anorganische Säuren, wie Salzsäure, Schwefelsäure, Phosphorsäue, Salpetersäure usw., oder organische Säuren, wie Carbonsäuren, organische Sulfonsäuren usw., oder saure Ionenaustauscher zugesetzt werden, wobei der pH der Hydrolysereaktion in der Regel zwischen 2 und 4,5, vorzugsweise bei 3 liegt.

Im allgemeinen zeigt sich nach dem Zusammengeben der Reaktionspartner ein Temperaturanstieg. In gewissen Fällen kann es notwendig werden, zum Start der Reaktion von außen Wärme zuzuführen, beispielsweise durch Erwärmen des Ansatzes auf 40 - 50°C. Im allgemeinen wird darauf geachtet, daß die Reaktionstemperatur 55°C nicht überschreitet. Die Reaktionsdauer ist in der Regel relativ kurz, sie liegt üblich unter einer Stunde, beispielsweise bei 45 min.

Die Silanverbindungen können zu Polymeren kondensiert werden, die im allgemeinen ein Gewichtsmittel des Molekulargewichts M_{w} im Bereich von 100 bis 20000, bevorzugt 200 bis 10000 und besonders bevorzugt 500 bis 1500 g/Mol aufweisen. Diese Molmasse kann beispielsweise durch NMR-Spektroskopie bestimmt werden.

Die Kondensationsreaktion kann beispielsweise durch Kühlen auf Temperaturen unter 0°C oder durch Erhöhen des pH-Wertes mit geeigneten Basen, beispielsweise Alkali- oder Erdalkalihydroxiden, abgebrochen werden.

Zur weiteren Bearbeitung kann ein Teil des Wasser-Alkoholgemisches und der flüchtigen Säuren aus der Reaktionsmischung abgetrennt werden, beispielsweise durch Destillation.

Anschließend kann mit geeigneten organischen Lösungsmitteln, wie z.B. Alkoholen, wie Ethanol, Methanol. Isopropanol, Butanol, Ethern, wie Diethylether, Dioxan, Ethern und Estern von Polyolen, wie z.B. Ethylenglykol, Propylenglykol sowie Ether und Estern dieser Verbindungen, Kohlenwasserstoffen, z.B. aromatischen Kohlenwasserstoffen, Ketonen, wie Aceton, Methylethylketon, der Feststoffgehalt auf ca. 15 - 35 Gew.-%, bezogen auf das Gesamtgewicht der Mischung, eingestellt werden. Besonders bevorzugt ist als Lösungsmittel Ethanol und/oder Propanol-2.

Es hat sich ferner als vorteilhaft erwiesen, den Beschichtungsmitteln solche Lösungsmittel zuzusetzen, die normalerweise den als Substrat der Beschichtung vorgesehenen Kunststoff anlösen. Im Falle von Polymethylmethacrylat (PMMA) als Substrat empfiehlt sich beispielsweise ein Zusatz von Lösungsmitteln, wie Toluol, Aceton, Tetrahydrofuran in Mengen, die 2 bis 20 Gew.-%, bezogen auf das Gesamtgewicht der Mittel, ausmachen. Der Wassergehalt wird im allgemeinen auf 5 - 20 Gew.-%, vorzugsweise auf 11 bis 15 Gew.-%, bezogen auf das Gesamtgewicht der Mittel, eingestellt.

Zur Verbesserung der Lagerfähigkeit kann der pH-Wert der wasserhaltigen Siloxanlacke auf einen Bereich von 3 - 6 eingestellt werden, bevorzugt zwischen 4,5 und 5,5. Zu diesem Zweck können beispielsweise auch Additive, insbesondere Propionamid zugegeben werden, die in EP-A-0 073 911 beschrieben sind.

Die erfindungsgemäß einsetzbaren Siloxanlacke können Härtungskatalysatoren, beispielsweise in Form von Zinkverbindungen und/oder anderer Metallverbindungen, wie Kobalt-, Kupfer- oder Calciumverbindungen, insbesondere deren Octoate oder Naphthenate, enthalten. Der Anteil der Härtungskatalysatoren beträgt in der Regel 0,1 - 2,5 Gew.-%, speziell 0,2 - 2 Gew.-%, bezogen auf den gesamten Siloxanlack, ohne daß hierdurch eine Beschränkung erfolgen soll. Besonders genannt seien beispielsweise Zinknaphthenat, -octoat, -acetat, -sulfat usw.

Die zuvor beschriebenen Siloxanlacke können kommerziell unter dem Handelsnamen ®Acriplex 100 und ®Acriplex 180 SR von Röhm GmbH & Co. KG erhalten werden.

Die zuvor dargelegten Sitoxanlacke können mit jeder bekannten Methode auf die Kunststoffsubstrate aufgebracht werden. Hierzu gehören unter anderem Tauchverfahren, Sprühverfahren, Rakeln, Flutbeschichtungen und Rollen- oder Walzenauftrag.

Die so aufgetragenen Siloxanlacke lassen sich im allgemeinen in relativ kurzer Zeit, beispielsweise innerhalb 2 bis 6 Stunden, in der Regel innerhalb ca. 3 bis 5 Stunden und bei vergleichsweise niedriger Temperatur, beispielsweise bei 70 - 110°C, vorzugsweise bei ca. 80°C zu hervorragend kratz- und haftfesten Beschichtungen aushärten.

Die Schichtdicke der Siloxan-Beschichtung (a) ist relativ unkritisch. Im allgemeinen liegt diese Größe nach der Härtung aber in einem Bereich von 1 bis 50 µm, bevorzugt 1,5 bis 30 µm und besonders bevorzugt 3 bis 15 µm, ohne daß hierdurch eine Beschränkung erfolgen soll. Die Schichtdicken der Beschichtungen (a) und/oder (b) kann durch eine Aufnahme eines Rasterelektronen-Mikroskops (REM) bestimmt werden.

Gemäß einem besonderen Aspekt der vorliegenden Erfindung beträgt der polare Anteil der Oberflächenenergie nach dem Aushärten der ersten Siloxanschicht vorzugsweise höchstens 8 mN/m, besonders bevorzugt höchstens 6 mN/m.

Nach einer bevorzugten Ausführungsform der vorliegenden Erfindung beträgt der Anteil des Siliciums der Siloxan-Beschichtung (a) nach der Härtung mindestens 20 Gew.-%, bevorzugt mindestens 30 Gew.-%, bezogen auf das Gesamtgewicht der Beschichtung, ohne daß hierdurch eine Beschränkung erfolgen soll. Der Anteil des Kohlenstoffs beträgt bevorzugt höchstens 36 Gew.-%, insbesondere höchstens 25 Gew.-%, bezogen auf das Gesamtgewicht der Beschichtung. Diese Anteile können mittels einer Elementaranalyse nach J. Liebig oder durch Atomabsorptionsspektrokopie (AAS) bestimmt werden.

Nach dem Härten der ersten Siloxanbeschichtung wird die Oberfläche aktiviert, indem der polare Anteil der Oberflächenenergie der ausgehärteten Siloxanbeschichtung auf einen Wert von mindestens 10 mN/m erhöht wird. Besonders bevorzugt wird der polare Anteil der Oberflächenenergie auf mindestens 15 mN/m erhöht.

Die Oberflächenenergie wird nach der Methode von Ownes-Wendt-Rabel & Kaelble bestimmt. Hierzu werden Messreihen mit der Standard-Serie nach Busscher durchgeführt, bei der als Testflüssigkeiten Wasser [SFT 72,1 mN/m], Formamid [SFT 56,9 mN/m, Dijodmethan [SFT 50,0 mN/m] und alpha-Bromnaphthalin [SFT 44,4 mN/m] eingesetzt werden. Die Messung wird bei 20°C durchgeführt. Die Oberflächenspannung und der polare und disperse Anteil dieser Testflüssigkeiten sind bekannt und werden zur Berechnung der Oberflächenenergie des Substrats eingesetzt.

Die Oberflächenenergie kann mit einem Kontaktwinkelmesssystem G40 der Fa. Krüss, Hamburg bestimmt werden, wobei die Durchführung im Benutzerhandbuch des Kontaktwinkelmesssystems G40, 1993 beschrieben ist. Hinsichtlich der Berechnungsmethoden sei auf A. W. Neumann, Über die Messmethodik zur Bestimmung grenzflächenenergetischer Größen, Teil I, Zeitschrift für Phys. Chem., Bd. 41, S. 339-352 (1964), und A. W. Neumann. Über die Messmethodik zur Bestimmung grenzflächenenergetischer Größen, Teil II, Zeitschrift für Phys. Chem., Bd. 43, S. 71-83 (1964) verwiesen.

Zur Aktivierung des Siloxangrundlacks sind verschiedene physikalische und chemische Verfahren geeignet. Hierzu gehören unter anderem eine Behandlung der Oberfläche mit chemischen Verfahren, insbesondere mit Laugen, Coronabehandlung, Beflammen, Plasma- oder Atmosphärenplasma-Behandlung. Hierbei sind chemische Verfahren und Coronabehandlung bevorzugt.

Die Aktivierung kann auf chemischem Wege erfolgen, wobei das mit dem Siloxangrundlack beschichtete Substrat einer Behandlung mit vorzugsweise flüssigen Reagenzien unterworfen wird. Hierbei werden bevorzugt nur die obersten Atomlagen des Siloxanlacks angeätzt. Gemäß einem besonderen Aspekt wird die Oberfläche mit einer alkalischen Lösung behandelt, deren pH-Wert mindestens 10, bevorzugt mindestens 12 beträgt.

Zum Beispiel kann das mit dem Siloxanlack beschichtete Substrat mit einer wäßrigen und/oder alkoholischen Lösung von Alkalimetallhydroxiden behandelt werden. Bevorzugte Alkohole sind Methanol, Ethanol, Propanol und/oder Butanol. Die Konzentration der Alkalimetallhydroxide liegt vorzugsweise im Bereich von 1 bis 20, insbesondere 2 bis 10 Gew.-%, bezogen auf das Gewicht der Ätzlösung. Alkalimetalle sind insbesondere Lithium, Natrium, Kalium, Rubidium und/oder Cäsium. Hiervon sind Natrium und/oder Kalium bevorzugt.

Die Einwirkzeit der alkalischen Lösung ist vom pH-Wert abhängig und kann daher in einem weiten Bereich liegen. Im allgemeinen genügen aber wenige Minuten. Besonders bevorzugt liegt die Einwirkzeit der alkalischen Lösung im Bereich von 30 Sekunden bis 60 Minuten, insbesondere 1 Minute bis 10 Minuten. Diese Oberflächenbehandlung kann beispielsweise durch Neutralwaschen oder Zugabe von Säuren abgebrochen werden.

Die alkalischen Lösungen können durch jede bekannte Methode auf die Siloxanbeschichtung aufgetragen werden. Diese Methoden wurden zuvor dargelegt.

Des weiteren kann der polare Anteil der Oberflächenenergie durch Coronabehandlung erhöht werden. Diese Methode ist beispielsweise in EP-A-1 180 426 beschrieben. Die Behandlungsdauer richtet sich nach der eingesetzten Energie und liegt vorzugsweise in einem Bereich von 1 bis 20 Sekunden, insbesondere von 2 bis 5 Sekunden. Ein zur Coronabehandlung geeigneter Generator kann beispielsweise von der Fa. Softal Electronic GmbH, Hamburg bezogen werden, der im Hochfrequenzbereich bei 20 bis 30 kHz betrieben werden kann (Generator 3005).

Nach der Aktivierung der ersten Siloxanschicht, die keine photokatalytisch wirksame Anteile enthält, wird eine zweite, TiO₂-Partikel enthaltende Schicht aufgetragen.

Der Lack zur Herstellung der zweiten Schicht kann im wesentlichen dem ersten Siloxanlack entsprechen, wobei jedoch photokatalytisch wirksame TiO₂-Partikel eingebracht werden müssen.

Ein derartiger Lack kann beispielsweise hergestellt werden, indem man einen zuvor beschriebenen Siloxanlack mit einer wäßrigen und/oder alkoholischen TiO₂-Partikel enthaltenden Zusammensetzung mischt.

Besonders geeignet sind insbesondere Beschichtungsmittel, die kollodial gelöste SiO₂-Partikel enthalten. Diese Partikel weisen bevorzugt die gleiche Größe auf wie die nachfolgend beschriebenen TiO₂-Partikel. Derartige Dispersionen können nach dem Sol-Gel-Verfahren hergestellt werden, wobei insbesondere Tetraalkoxysilane und/oder Tetrahalogensilane kondensiert werden.

Derartige TiO₂-Partikel enthaltenden Zusammensetzungen sind unter anderem aus EP-A-0 826 663, EP-A-0 850 203 und EP-1 022 318 bekannt. Des weiteren können derartige Zusammensetzungen beispielsweise von Showa Denko Kabushiki Kaisha, Japan, unter dem Handelsnamen NTB 30A oder Toto Ltd., Japan kommerziell erhalten werden.

Die TiO₂-Partikel sind photokatalytisch aktiv. Dementsprechend liegt zumindest ein Teil der TiO₂-Partikel in der Brookit und/oder Anatas-Modifikation vor. Die Partikelgröße ist unkritisch, wobei jedoch die Transparenz von der Partikelgröße abhängig ist. Bevorzugt weisen die Partikel höchstens eine Größe von 300 nm auf, wobei sie insbesondere in einem Bereich von 1 bis 200 nm, bevorzugt 1 bis 50 nm liegen.

Die zweite, TiO₂-Partikel enthaltende Schicht kann mit den zuvor beschriebenen Methoden aufgebracht und ausgehärtet werden.

Gemäß einer besonderen Ausführungsform sind die TiO₂-Partikel in der zweiten Beschichtung in einer Menge im Bereich von 0,01 bis 90 Gew.-%, bevorzugt 0,1 bis 75 Gew.-%, bezogen auf das Gesamtgewicht der zweiten Beschichtung nach der Härtung, vorhanden.

Die Schichtdicke der TiO₂-Partikel enthaltenden Siloxanbeschichtung b) ist ebenfalls unkritisch. Im allgemeinen liegt diese Größe nach der Härtung im Bereich von 0,05 bis 2 µm, bevorzugt 0,1 bis 1 µm.

Gemäß einer besonderen Ausführungsform des Kunststoffkörpers liegt die gesamte Schichtdicke der Beschichtungen (a) und (b) nach der Härtung in einem Bereich von 2 bis 30 µm, insbesondere von 3 bis 15 µm.

Die mit einer photokatalytischen Beschichtung versehenen Kunststoffkörper der vorliegenden Erfindung zeigen eine hohe Scheuerfestigkeit. Bevorzugt ist die Scheuerfestigkeit gemäß DIN 53778 größer oder gleich 10 000 Zyklen, Insbesondere größer oder gleich 15 000 Zyklen und besonders bevorzugt größer oder gleich 20 000 Zyklen.

Gemäß einem besonderen Aspekt der vorliegenden Erfindung ist der Kunststoffkörper transparent, wobei die Transparenz τ_{D65/10} gemäß DIN 5033 mindestens 70%, bevorzugt mindestens 75% beträgt.

Bevorzugt weist der Kunststoffkörper einen E-Modul nach ISO 527-2 von mindestens 1000 MPa, insbesondere mindestens 1500 MPa auf, ohne daß hierdurch eine Beschränkung erfolgen soll.

Die erfindungsgemäßen Kunststoffkörper sind im allgemeinen sehr beständig gegenüber Bewitterung. So ist die Bewitterungsbeständigkeit gemäß DIN 53387 (Xenotest) mindestens 5000 Stunden.

Auch nach einer langen UV-Bestrahlung von mehr als 5000 Stunden ist der Gelbindex gemäß DIN 6167 (D65/10) von bevorzugten Kunststoffkörpern kleiner oder gleich 8, bevorzugt kleiner oder gleich 5, ohne daß hierdurch eine Beschränkung erfolgen soll.

Die Kunststoffkörper der vorliegenden Erfindung können beispielsweise im Baubereich, insbesondere zur Herstellung von Gewächshäusern oder Wintergärten, oder als Lärmschutzwand dienen.

Nachfolgend wird die Erfindung durch Beispiele und Vergleichsbeispiele eingehender erläutert, ohne daß die Erfindung auf diese Beispiele beschränkt werden soll.

### Beispiel 1

PMMA-Platten einer Dimension von 150*350*3 mmm wurden mit einem Kratzfestlack (®Acriplex 100 SR, Röhm GmbH & Co. KG) versehen, wobei die Schichtdicke des Lacks nach der Aushärtung 7,5 µm betrugt.

Nach der Aushärtung des Lacks betrug der polare Anteil der Oberflächenenergie 5,5 mN/m. Hiemach wurde die Oberfläche fünf Minuten mit einem 5% KOH Wasser/Ethanolgemisch (1:3 Gewichtsteile) behandelt und anschließend neutral gewaschen. Die Oberflächenenergie wurde mit einem Kontaktwinkelmesssystem G40 der Fa. Krüss, Hamburg bestimmt, wobei als Testflüssigkeiten Wasser [SFT 72,1 mN/m], Formamid [SFT 56,9 mN/m, Dijodmethan [SFT 50,0 mN/m] und alpha-Bromnaphthalin [SFT 44,4 mN/m] eingesetzt wurden. Der polare Anteil der Oberflächenenergie betrug 15,3 mN/m.

Nach der Aktivierung wurde ein TiO₂-Partikel und SiO₂-Partikel enthaltende kolloidale Lösung durch Flutbeschichtung aufgetragen (3:1 Mischung von NTB 30A (TiO₂) mit NTB 30B (SiO₂) erhältlich von Showa-Denko). Der Verlauf des Lacks und die Haftung waren gut. Die so erhaltene Beschichtung wurde drei Stunden bei 80°C gehärtet.

Die Kratzfestigkeit der Beschichtung gemäß dem Nassscheuertest nach DIN 53778 wurde einem Nassscheuertestgerät der Fa. Gardner, Modell M 105/A durchgeführt. Es wurde ein Wert von 20000 Zyklen bestimmt.

### Beispiel 2

Das Beispiel 1 wurde im wesentlichen wiederholt, wobei jedoch NaOH anstatt KOH eingesetzt wurde. Der polare Anteil der Oberflächenenergie betrug 12,8 mN/m.

Der Verlauf und die Haftung der zweiten Beschichtung war ebenfalls gut, wobei eine Kratzfestigkeit von 15000 Zyklen bestimmt wurde.

### Beispiel 3

Das Beispiel 1 wurde im wesentlichen wiederholt, wobei jedoch die Aktivierung der ersten Beschichtung durch eine Coronabehandlung erfolgte. Hierbei wurde die Platte viermal mit 1 m/min durch eine Coronaanlage durchgeführt (Fa. Softal Electronic GmbH, Hamburg Hochfrequenzbereich bei 20 bis 30 kHz).

Der Verlauf und die Haftung der zweiten Beschichtung war ebenfalls gut, wobei eine Kratzfestigkeit von 12000 Zyklen bestimmt wurde.

### Vergleichsbeispiel 1

Das Beispiel 1 wurde im wesentlichen wiederholt, wobei jedoch H₃PO₄ anstatt KOH eingesetzt wurde. Der polare Anteil der Oberflächenenergie betrug 6,5 mN/m.

Der Verlauf und die Haftung der zweiten Beschichtung war so schlecht, daß keine Kratzfestigkeit bestimmt werden konnte.

### Vergleichsbeispiel 2

Das Beispiel 1 wurde im wesentlichen wiederholt, wobei jedoch keine Aktivierung erfolgte. Der polare Anteil der Oberflächenenergie betrug 5,5 mN/m.

Der Verlauf und die Haftung der zweiten Beschichtung war so schlecht, daß keine Kratzfestigkeit bestimmt werden konnte.

### Vergleichsbeispiel 3

Das Beispiel 1 wurde im wesentlichen wiederholt, wobei die erste Beschichtung jedoch unvollständig gehärtet wurde. Die Härtungszeiten betrug 0,5 bis 2,0 Stunden bei 80°C.

Der Verlauf der Beschichtungslösung auf der angehärteten Schicht war nicht zufriedenstellend und nach Aushärtung der zweiten Schicht erhielt man eine nicht mehr kratzfeste mechanisch instabile Beschichtung, die sich bereits durch Reiben mit einem Tuch beschädigen ließ. Die Kratzfestigkeit konnte nicht bestimmt werden.

## Patentansprüche

1. Selbstreinigender Kunststoffkörper, dadurch erhältlich, daß man auf ein Kunststoffsubstrat
a) eine Sitoxan-Beschichtung (a) aufbringt und aushärtet,
b) den polaren Anteil der Oberflächenenergie der ausgehärteten Siloxanbeschichtung auf einen Wert von mindestens 10 mN/m erhöht und
c) eine photokatalytisch aktive TiO₂-Partikel enthaltende Beschichtung (b) aufbringt und aushärtet.

2. Kunststoffkörper gemäß Anspruch 1, **dadurch gekennzeichnet, daß** das Kunststoffsubstrat Cycloolefin-Copolymere, Polyethylenterephthalate, Polycarbonate und/oder Poly(meth)acrylate umfaßt.

3. Kunststoffkörper gemäß Anspruch 2, **dadurch gekennzeichnet, daß** das Kunststoffsubstrat aus Polymethylmethacrylat besteht.

4. Kunststoffkörper gemäß einem oder mehreren der vorhergehenden Ansprüche, **dadurch gekennzeichnet, daß** das Kunststoffsubstrat eine Schlagzähigkeit von mindestens 10 kJ/m² gemäß ISO 179/1 aufweist.

5. Kunststoffkörper gemäß einem oder mehreren der vorhergehenden Ansprüche, **dadurch gekennzeichnet, daß** das Kunststoffsubstrat eine Dicke im Bereich von 1 mm bis 200 mm aufweist.

6. Kunststoffkörper gemäß einem oder mehreren der vorhergehenden Ansprüche, **dadurch gekennzeichnet, daß** die Siloxan-Beschichtung durch Kondensation einer Zusammensetzung erhältlich ist, die mindestens 80 Gew.-% Alkyltrialkoxysilane, bezogen auf den Gehalt an kondensierbaren Silanen, umfaßt.

7. Kunststoffkörper gemäß einem oder mehreren der vorhergehenden Ansprüche, **dadurch gekennzeichnet, daß** die Siloxan-Beschichtung kondensierbare Polysiloxane umfaßt, die ein Molekulargewicht im Bereich von 500 bis 1500 g/Mol aufweisen.

8. Kunststoffkörper gemäß einem oder mehreren der vorhergehenden Ansprüche, **dadurch gekennzeichnet, daß** der Anteil des Siliciums der Siloxan-Beschichtung (a) mindestens 30 Gew.-%, bezogen auf das Gesamtgewicht der Beschichtung, beträgt.

9. Kunststoffkörper gemäß einem oder mehreren der vorhergehenden Ansprüche, **dadurch gekennzeichnet, daß** man den polaren Anteil der Oberflächenenergie der Siloxan-Beschichtung (a) durch Härtung auf einen Wert kleiner oder gleich 6 mN/m erniedrigt, bevor man den polaren Anteil der Oberflächenenergie auf mindestens 10 mN/m erhöht.

10. Kunststoffkörper gemäß einem oder mehreren der vorhergehenden Ansprüche, **dadurch gekennzeichnet, daß** man den polaren Anteil der Oberflächenenergie der Siloxan-Beschichtung (a) nach der Härtung durch eine Behandlung mit alkoholischer Kaliumhydroxid-Lösung erhöht.

11. Kunststoffkörper gemäß einem oder mehreren der vorhergehenden Ansprüche, **dadurch gekennzeichnet, daß** die TiO₂-Partikel eine Größe im Bereich von 1 nm bis 300 nm aufweisen.

12. Kunststoffkörper gemäß einem oder mehreren der vorhergehenden Ansprüche, **dadurch gekennzeichnet, daß** die TiO₂-Partikel in der zweiten Beschichtung (b) in einer Menge im Bereich von 0,01 bis 90 Gew.-%, bezogen auf das Gesamtgewicht der zweiten Beschichtung (b) nach der Härtung, vorhanden ist.

13. Kunststoffkörper gemäß einem oder mehreren der vorhergehenden Ansprüche, **dadurch gekennzeichnet, daß** die Schichtdicke der Siloxan-Beschichtung (a) nach der Härtung im Bereich von 1,5 bis 30 µm liegt.

14. Kunststoffkörper gemäß einem oder mehreren der vorhergehenden Ansprüche, **dadurch gekennzeichnet, daß** die Schichtdicke der Beschichtung (b) nach der Härtung im Bereich von 0,01 bis 2 µm liegt.

15. Kunststoffkörper gemäß einem oder mehreren der vorhergehenden Ansprüche, **dadurch gekennzeichnet, daß** die Schichtdicke der Beschichtungen (a) und (b) nach der Härtung im Bereich von 3 bis 15 µm liegt.

16. Kunststoffkörper gemäß einem oder mehreren der vorhergehenden Ansprüche, **dadurch gekennzeichnet, daß** die Scheuerfestigkeit des Kunststoffkörpers gemäß DIN 53778 mindestens 15 000 beträgt.

17. Kunststoffkörper gemäß einem oder mehreren der vorhergehenden Ansprüche, **dadurch gekennzeichnet, daß** der Kunststoffkörper einen E-Modul nach ISO 527-2 von mindestens 1500 MPa aufweist.

18. Kunststoffkörper gemäß einem oder mehreren der vorhergehenden Ansprüche, **dadurch gekennzeichnet, daß** der Kunststoffkörper eine Bewitterungsbeständigkeit gemäß DIN 53 387 von mindestens 5000 Stunden aufweist.

19. Kunststoffkörper gemäß einem oder mehreren der vorhergehenden Ansprüche, **dadurch gekennzeichnet, daß** der Kunststoffkörper eine Transparenz gemäß DIN 5033 von mindestens 70% aufweist.

20. Kunststoffkörper gemäß einem oder mehreren der vorhergehenden Ansprüche, **dadurch gekennzeichnet, daß** der Kunststoffkörper einen Gelbindex kleiner oder gleich 5 nach 5000 Stunden UV-Bestrahlung aufweist.

21. Verfahren zur Herstellung von selbstreinigenden Kunststoffkörpern gemäß einem oder mehreren der Ansprüche 1 bis 21, **dadurch gekennzeichnet, daß** man auf ein Kunststoffsubstrat
a) eine Siloxan-Beschichtung (a) aufbringt und aushärtet,
b) den polaren Anteil der Oberflächenenergie der ausgehärteten Siloxan-Beschichtung auf einen Wert von mindestens 10 mN/m erhöht und
c) eine photokatalytisch aktive TiO₂-Partikel enthaltende Beschichtung (b) aufbringt und aushärtet.

## Claims

1. Self-cleaning plastic body, obtainable by
a) applying a siloxane coating (a) to a plastic substrate and curing the said coating,
b) raising the polar fraction of the surface energy of the cured siloxane coating to a value of at least 10 mN/m, and
c) applying a coating (b) containing photocatalytically active TiO₂ particles and curing the said coating.

2. Plastic body according to Claim 1, **characterised in that** the plastic substrate comprises cycloolefin copolymers, polyethylene terephthalates, polycarbonates and/or poly(meth)acrylates.

3. Plastic body according to Claim 2, **characterised in that** the plastic substrate is composed of polymethyl methacrylate.

4. Plastic body according to one or more of the preceding claims, **characterised in that** the plastic substrate has an impact resistance of at least 10 kJ/m² according to ISO 179/1.

5. Plastic body according to one or more of the preceding claims, **characterised in that** the plastic substrate has a thickness in the range from 1 mm to 200 mm.

6. Plastic body according to one or more of the preceding claims, **characterised in that** the siloxane coating is obtainable by condensation of a composition which contains at least 80 wt.% of alkyltrialkoxysilanes, based on the content of condensable silanes.

7. Plastic body according to one or more of the preceding claims, **characterised in that** the siloxane coating contains condensable polysiloxanes having a molecular weight in the range from 500 to 1500 g/mol.

8. Plastic body according to one or more of the preceding claims, **characterised in that** the proportion of silicon in the siloxane coating (a) is at least 30 wt.%, based on the total weight of the coating.

9. Plastic body according to one or more of the preceding claims, **characterised in that** the polar fraction of the surface energy of siloxane coating (a) is reduced by curing to a value less than or equal to 6 mN/m before the polar fraction of the surface energy is raised to at least 10 mN/m.

10. Plastic body according to one or more of the preceding claims, **characterised in that**, after curing, the polar fraction of the surface energy of siloxane coating (a) is raised by treating with alcoholic potassium hydroxide solution.

11. Plastic body according to one or more of the preceding claims, **characterised in that** the TiO₂ particles are of a size in the range from 1 nm to 300 nm.

12. Plastic body according to one or more of the preceding claims, **characterised in that** the TiO₂ particles in the second coating (b) are present in a quantity in the range from 0.01 to 90 wt.%, based on the total weight of the second coating (b) after curing.

13. Plastic body according to one or more of the preceding claims, **characterised in that** the layer thickness of siloxane coating (a) after curing is in the range from 1.5 to 30 µm.

14. Plastic body according to one or more of the preceding claims, **characterised in that** the layer thickness of coating (b) after curing is in the range from 0.01 to 2 µm.

15. Plastic body according to one or more of the preceding claims, **characterised in that** the layer thickness of coatings (a) and (b) after curing is in the range from 3 to 15 µm.

16. Plastic body according to one or more of the preceding claims, **characterised in that** the abrasion resistance of the plastic body according to DIN 53778 is at least 15,000.

17. Plastic body according to one or more of the preceding claims, **characterised in that** the plastic body has an E-modulus according to ISO 527-2 of at least 1500 MPa.

18. Plastic body according to one or more of the preceding claims, **characterised in that** the plastic body has a weathering resistance according to DIN 53 387 of at least 5000 h.

19. Plastic body according to one or more of the preceding claims, **characterised in that** the plastic body has a transparency according to DIN 5033 of at least 70%.

20. Plastic body according to one or more of the preceding claims, **characterised in that** the plastic body has a yellowness index of less than or equal to 5 after 5000 hours of UV irradiation.

21. Method of manufacturing self-cleaning plastic bodies according to one or more of Claims 1 to 21, **characterised in that**
a) a siloxane coating (a) is applied to a plastic substrate and cured,
b) the polar fraction of the surface energy of the cured siloxane coating is raised to a value of at least 10 mN/m, and
c) a coating (b) containing a photocatalytically active TiO₂ particle is applied and cured.

## Revendications

1. Corps plastique autonettoyant que l'on peut obtenir :
a) en appliquant et en durcissant sur un substrat en plastique un revêtement de siloxane (a),
b) en augmentant la fraction polaire de l'énergie superficielle du revêtement de siloxane durci jusqu'à une valeur d'au moins 10 mN/m, et
c) en appliquant et en durcissant un revêtement (b) contenant des particules de TiO₂ photo-catalytiquement actives.

2. Corps plastique selon la revendication 1,
**caractérisé en ce que**
le substrat en plastique comporte des copolymères de cyclooléfines, des téréphthalates de polyéthylène, des polycarbonates et/ou des poly(méth)acrylates.

3. Corps plastique selon la revendication 2,
**caractérisé en ce que**
le substrat en plastique est constitué de polyméthacrylate de méthyle.

4. Corps plastique selon une ou plusieurs des revendications précédentes,
**caractérisé en ce que**
le substrat en plastique présente une résistance au choc d'au moins 10 kJ/m² selon ISO 179/ 1.

5. Corps plastique selon une ou plusieurs des revendications précédentes,
**caractérisé en ce que**
le substrat en plastique présente une épaisseur se situant dans la plage de 1 mm à 200 mm.

6. Corps plastique selon une ou plusieurs des revendications précédentes,
**caractérisé en ce que**
le revêtement de siloxane peut être obtenu par condensation d'une composition qui comprend au moins 80 % en poids d'alkyltrialcoxysilanes, rapporté à la teneur en silanes condensables.

7. Corps plastique selon une ou plusieurs des revendications précédentes,
**caractérisé en ce que**
le revêtement de siloxane comporte des polysiloxanes condensables qui présentent un poids moléculaire se situant dans la plage de 500 à 1 500 g/mole.

8. Corps plastique selon une ou plusieurs des revendications précédentes,
**caractérisé en ce que**
la proportion du silicium du revêtement de siloxane (a) représente au moins 30 % en poids, rapporté au poids total du revêtement.

9. Corps plastique selon une ou plusieurs des revendications précédentes,
**caractérisé en ce qu'**
on abaisse la fraction polaire de l'énergie superficielle du revêtement de siloxane (a) par durcissement jusqu'à une valeur inférieure ou égale à 6 mN/m avant d'augmenter la fraction polaire de l'énergie superficielle jusqu'à au moins 10 mN/m.

10. Corps plastique selon une ou plusieurs des revendications précédentes,
**caractérisé en ce qu'**
on augmente la fraction polaire de l'énergie superficielle du revêtement de siloxane (a) après le durcissement grâce à un traitement avec une solution alcoolique d'hydroxyde de potassium.

11. Corps plastique selon une ou plusieurs des revendications précédentes,
**caractérisé en ce que**
les particules de TiO₂ ont une taille se situant dans la plage de 1 nm à 300 nm.

12. Corps plastique selon une ou plusieurs des revendications précédentes,
**caractérisé en ce que**
les particules de TiO₂ sont présentes dans le deuxième revêtement (b) dans une proportion située dans la plage de 0,01 à 90 % en poids, rapporté au poids total du deuxième revêtement (b) après le durcissement.

13. Corps plastique selon une ou plusieurs des revendications précédentes,
**caractérisé en ce que**
l'épaisseur de couche du revêtement de siloxane (a) après le durcissement se situe dans la plage de 1,5 à 30 µm.

14. Corps plastique selon une ou plusieurs des revendications précédentes,
**caractérisé en ce que**
l'épaisseur de couche du revêtement (b) après le durcissement se situe dans la plage de 0,01 à 2 µm.

15. Corps plastique selon une ou plusieurs des revendications précédentes,
**caractérisé en ce que**
l'épaisseur des couches du revêtements (a) et (b) après le durcissement se situe dans une plage de 3 à 15 µm.

16. Corps plastique selon une ou plusieurs des revendications précédentes,
**caractérisé en ce que**
la résistance au frottement du corps plastique selon DIN 53778 est au moins de 15 000.

17. Corps plastique selon une ou plusieurs des revendications précédentes,
**caractérisé en ce que**
ce corps plastique présente un module E selon ISO 527-2 d'au moins 1 500 Mpa.

18. Corps plastique selon une ou plusieurs des revendications précédentes,
**caractérisé en ce que**
ce corps plastique présente une résistance aux influences atmosphériques selon DIN 53 387 d'au moins 5 000 heures.

19. Corps plastique selon une ou plusieurs des revendications précédentes,
**caractérisé en ce que**
ce corps plastique présente une transparence selon DIN 5033 d'au moins 70 %.

20. Corps plastique selon une ou plusieurs des revendications précédentes,
**caractérisé en ce que**
ce corps plastique présente un indice de jaune inférieur ou égal à 5 après 5 000 heures d'irradiation par les UV.

21. Procédé de production de corps plastiques autonettoyants selon une ou plusieurs des revendications 1 à 21,
**caractérisé en ce que** :
a) on applique et on durcit sur un substrat en plastique un revêtement de siloxane (a),
b) on augmente la fraction polaire de l'énergie superficielle du revêtement de siloxane durci jusqu'à une valeur d'au moins 10 mN/m, et
c) on applique et on durcit un revêtement (b) contenant des particules de TiO₂ photo-catalytiquement actives.
